(19) Europäisches Patentamt
European Patent Office
Office européen des brevets

(11) EP 2 287 058 A1

(12) **EUROPEAN PATENT APPLICATION**

(43) Date of publication:
23.02.2011 Bulletin 2011/08

(51) Int Cl.:
*B60W 20/00* (2006.01)   *B60K 6/48* (2007.10)
*B60W 10/02* (2006.01)   *B60W 10/06* (2006.01)
*B60W 10/08* (2006.01)

(21) Application number: 10173060.4

(22) Date of filing: 17.08.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 18.08.2009 JP 2009189308

(71) Applicant: Toyota Jidosha Kabushiki Kaisha
Toyota-shi, Aichi 471-8571 (JP)

(72) Inventors:
• **Sato, Hiroshi**
**Toyota-shi Aichi 471-8571 (JP)**
• **Toyora, Sachio**
**Toyota-shi Aichi 471-8571 (JP)**
• **Murakami, Koji**
**Toyota-shi Aichi 471-8571 (JP)**
• **Tabata, Mitsuhiro**
**Toyota-shi Aichi 471-8571 (JP)**
• **Tsujii, Hiroshi**
**Toyota-shi Aichi 471-8571 (JP)**

(74) Representative: TBK-Patent
Bavariaring 4-6
80336 München (DE)

(54) **Control device for hybrid vehicle**

(57)     A control device for a hybrid vehicle (1) that includes a engine (10); an electric motor (20); a manual transmission (30); and a clutch mechanism (80) that transmits torque between the electric motor (20) and the manual transmission (30), the engine (10) being configured to be started using the torque of the electric motor (20). The control device (100) includes clutch transmitting torque adjusting means that decreases the clutch transmitting torque of the clutch mechanism at startup of the engine (10).

FIG.1

EP 2 287 058 A1

**Description**

BACKGROUND OF THE INVENTION

1. Field of the Invention

The present invention relates to a control device for a hybrid vehicle that includes an engine and an electric motor as power sources; a manual transmission that transmits power from the power sources to the driving wheels; and a clutch mechanism that is interposed between the electric motor and a power transmission device such as a manual transmission.

2. Description of the Related Art

Japanese Patent Application Publication No. 11-75302 (JP-A-11-75302) describes a hybrid vehicle that includes an engine, a motor/generator, a manual transmission, and a clutch mechanism interposed between the motor/generator and the manual transmission. The clutch mechanism may be engaged and disengaged in response to operation of the clutch pedal by the driver. Japanese Patent Application Publication No. 2008-44521 (JP-A-2008-44521) describes a hybrid vehicle that includes an engine, a motor/generator, an automatic transmission, a first clutch mechanism interposed between the engine and the motor/generator, and a second clutch mechanism interposed between the motor/generator and the automatic transmission. The engagement and release of the first and second clutch mechanisms is controlled by an ECU. In the hybrid vehicle of JP-A-2008-44521, the motor torque of the motor/generator is used to start the engine. At this time, the motor torque is increased and the second clutch mechanism is slipped. Furthermore, Japanese Patent Application Publication No. 2007-325417 (JP-A-2007-325417) describes a hybrid vehicle that includes an engine, a motor, a transmission, a first clutch mechanism interposed between the engine and the motor, and a second clutch mechanism interposed between the motor and the transmission. The engagement and release of the first and second clutch mechanism is controlled by an ECU. In the hybrid vehicle of JP-A-2007-325417, if there is a possibility of a motor lock, the driving force of the motor is adjusted to a level that corresponds to an engine stall during a clutch operation in a vehicle that includes a manual transmission to inform the driver of the possibility of a motor lock.

Japanese Patent Application Publication No. 2002-211250 (JP-A-2002-211250) describes a hybrid vehicle that includes an engine, a motor, a clutch mechanism that is interposed between the engine and the motor, and a manual transmission that has an input shaft that is coupled to an output shaft of the motor.

In a hybrid vehicle that includes an engine, a motor/generator, a manual transmission, and a clutch mechanism that is interposed between the motor/generator and the manual transmission, it is contemplated to use the motor torque of the motor/generator to crank the engine when the engine is started, as with the hybrid vehicle that is described in JP-A-2008-44521. Here, in such a clutch mechanism, the clutch transmitting torque (transmittable torque capacity) increases as the degree of engagement increases (i.e., as the clutch mechanism is brought closer to complete engagement, the pressing force between the engaging members increases). In a hybrid vehicle, when the clutch transmitting torque increases, the motor rotational angular velocity may decrease because of the load (resistive torque of the power transmission device) against the motor torque of the motor/generator during EV driving. If the decrease in the motor rotational angular velocity occurs when the engine start is requested during EV driving, the motor rotational angular velocity may fall below a specified motor rotational angular velocity that is necessary to crank the engine during startup. Then, the rotational angular velocity of the engine output shaft cannot be increased to a speed that is sufficient to crank the engine and the motor torque that is necessary for the cranking may not be achieved. Thus, when the above-described situation occurs, the engine cannot be started. Also, even if the motor rotational angular velocity increases after the synchronization with the power transmission device side, it may take a long time for it to increase. Thus, the start of the engine may be delayed due to prolonged cranking.

SUMMARY OF INVENTION

The present invention provides a control device for a hybrid vehicle that can secure a motor rotational angular velocity and a motor torque that are necessary for proper cranking of the engine.

An aspect of the present invention relates to a control device for a hybrid vehicle that includes: an engine as a power source; an electric motor as another power source; a manual transmission; and a clutch mechanism that transmits torque between the electric motor and the manual transmission, the engine being configured to be started by electric motor torque of the electric motor. The control device for a hybrid vehicle includes clutch transmitting torque adjusting means that decreases the clutch transmitting torque of the clutch mechanism at startup of the engine. According to the above aspect, because the clutch transmitting torque of the clutch mechanism between the electric motor and the manual transmission is decreased when the engine is started, the electric motor rotational angular velocity of the electric motor may be maintained at a rotational angular velocity that is sufficient for cranking of the engine and an electric motor torque that is necessary for the cranking can be transmitted to the output shaft of the engine. Thus, the control device enables the rotational angular velocity of the output shaft of the engine to increase to a specified value so that the engine may be properly started.

In the above aspect, the clutch transmitting torque adjusting means may adjust the degree of engagement of the clutch mechanism so that the clutch transmitting torque of the clutch mechanism can decrease to a specified value or lower.

In the above aspect, the clutch transmitting torque of the clutch mechanism may change in response to a clutch engaging operation or a clutch releasing operation of the driver of the hybrid vehicle, and the clutch transmitting torque adjusting means may decrease the clutch transmitting torque of the clutch mechanism that has increased in response to a clutch engaging operation of the driver at startup of the engine.

Also, in the above aspect, the clutch transmitting torque adjusting means may restrain the driver from performing a clutch engaging operation. Then, because it is possible to prompt the driver to decrease the clutch transmitting torque of the clutch mechanism, the engine can be started properly.

Also, in the above aspect, the clutch transmitting torque adjusting means may convey to the driver alerting information that restrains the driver from performing a clutch engaging operation.

Also, in the above aspect, the clutch transmitting torque adjusting means may restrain the driver from performing a clutch engaging operation by repeatedly increasing and decreasing electric motor torque of the electric motor. Then, because the driver, who feels a vibration that is caused by the alternating increase and decrease in the electric motor torque, determines that the engine is about to stall and restrains oneself from a clutch engaging operation, the clutch transmitting torque of the clutch mechanism decreases and the engine can be started properly.

Also, in the above aspect, the clutch transmitting torque adjusting means may restrain the driver from performing a clutch engaging operation by decreasing electric motor torque of the electric motor. Then, because the driver, who feels a vibration that is caused by the decrease in the electric motor torque, determines that the engine is about to stall and restrains oneself from a clutch engaging operation, the clutch transmitting torque of the clutch mechanism decreases and the engine can be started properly.

In the above aspect, the clutch mechanism may be engaged or released at the operating speed that corresponds to the clutch operating speed of the driver of the hybrid vehicle, and the clutch transmitting torque adjusting means may decrease the engaging speed of the clutch mechanism to an engaging speed that corresponds to the clutch operating speed of the driver or lower when the clutch operating speed at which the driver operates the clutch mechanism to the engaging state is higher than a specified speed at startup of the engine. Then, because the rate of increase in the clutch transmitting torque decreases, the electric motor rotational angular velocity of the electric motor may be maintained at a rotational angular velocity that is sufficient to crank the engine and an electric motor torque that is sufficient for the cranking is transmitted to the output shaft of the engine. As a result, the engine may be started properly.

In addition, in the above aspect, the clutch mechanism may be engaged or released by a clutch operation of the driver, and the clutch transmitting torque adjusting means may increase the change in the output of the electric motor torque of the electric motor if the engaging speed of the clutch mechanism when the engine is started exceeds a prescribed speed. Then, because the clutch transmitting torque is decreased when the driver releases the clutch, the electric motor rotational angular velocity of the electric motor may be maintained at a rotational angular velocity that is necessary for cranking of the engine and an electric motor torque that is necessary for the cranking can be transmitted to the output shaft of the engine. As a result, the engine can be started properly.

BRIEF DESCRIPTION OF DRAWINGS

The foregoing and further features and advantages of the invention will become apparent from the following description of example embodiments with reference to the accompanying drawings, wherein like numerals are used to represent like elements and wherein:

FIG. 1 illustrates the configuration of a control device for a hybrid vehicle according to an embodiment of the present invention;
FIG. 2 is a time chart that shows the motor rotational angular velocity, the states of clutch mechanisms, and so on when an engine stall state is created as a result of an engine stall control;
FIG. 3 is a time chart that shows the motor rotational angular velocity, the states of clutch mechanisms, and so on during an engine start control when the degree of engagement of a manual clutch is low;
FIG. 4 is a time chart that shows the motor rotational angular velocity, the states of clutch mechanisms, and so on during engine start control when the degree of engagement of the manual clutch decreases after execution of the engine stall control;
FIG. 5 is a flowchart that shows an engine start operation, during EV driving, of the control device for a hybrid vehicle according to an embodiment of the present invention;

FIG. 6 is a time chart that shows the motor rotational angular velocity, the states of clutch mechanisms, and so on when the engine-start control is executed during high-speed EV driving;

FIG. 7 is a time chart that shows the motor rotational angular velocity, the states of clutch mechanism and so on when an engine stall state is created as a result of engine stall control that involves vibration;

FIG. 8 is a view that illustrates control elements that are used to generate a vibration using the motor torque when the engine stall control is executed; and

FIG. 9 shows an example of a correction map for damper characteristics.

## DETAILED DESCRIPTION OF EMBODIMENTS

A control device for a hybrid vehicle according to an embodiment of the present invention will be described with respect to the drawings. It should be noted that the present invention is not restricted to the particulars of the embodiment.

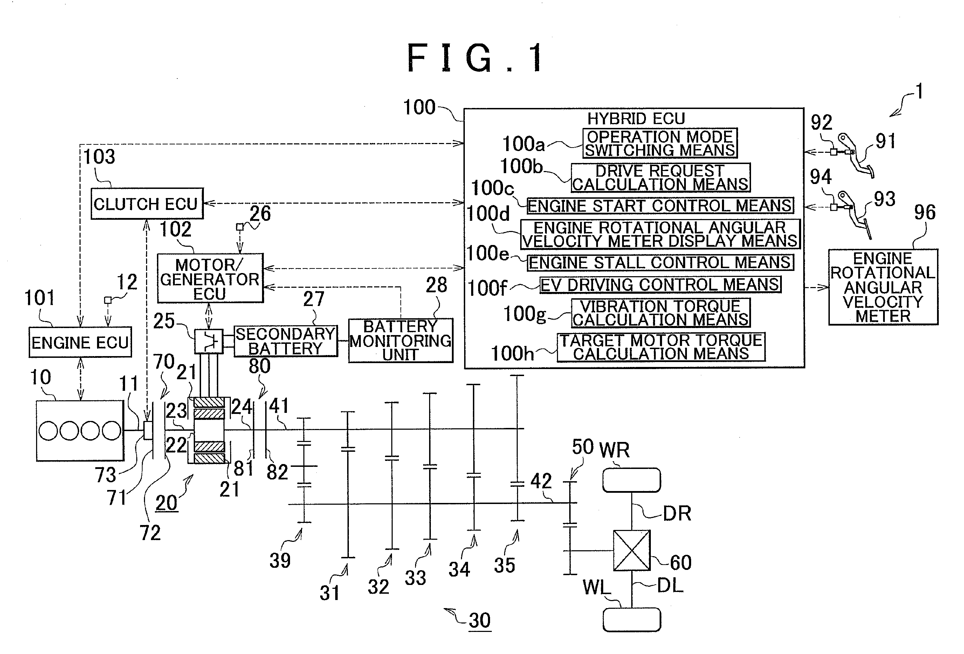

An embodiment of a control device for a hybrid vehicle according to the present invention is described below based on FIG. 1 through FIG. 9.

An example of the hybrid vehicle equipped with the control device according to the embodiment of the present invention is described with reference to FIG. 1.

As shown in FIG. 1, the hybrid vehicle 1 includes: an engine; an electric motor as power sources; a power transmission device that transmits the output of the power sources to the driving wheels WL and WR; a first clutch mechanism that transmits torque between the engine and the electric motor; and a second clutch mechanism that transmits torque between the power sources and the power transmission device.

In this embodiment, an engine 10 is equipped as the engine. An internal combustion engine may be employed as the engine, i.e., a heat engine in which fuel is burned in a combustion chamber and thermal energy that is generated by the combustion is converted into mechanical energy. Alternatively, an external combustion engine, i.e., a heat engine in which thermal energy is converted into mechanical energy by repeatedly heating and cooling a gas in the engine with an external heat source to expand and contract the gas, and so on, may be employed as the engine. Here, a reciprocating piston engine that is a type of the former, i.e., an internal combustion engine, and that uses gasoline as the fuel and outputs mechanical power through an engine output shaft (crankshaft) 11 described as an example. Operations of the engine 10, such as fuel injection control, are controlled by engine control means of an electronic control unit 101 (hereinafter referred to as "engine ECU 101"). The engine ECU 101 determines the rotational angular velocity of the engine output shaft 11 (engine rotational angular velocity, engine rotational angular velocity) and the rotational speed (engine rotational speed) of the engine based on a detection signal that is received from a crank angle sensor 12.

A motor/generator 20 may be employed as the electric motor. The motor/generator 20 is constituted as a permanent magnet AC synchronous electric motor, for example, and has a stator 21 that produces a rotating magnetic field when supplied with three-phase AC electric power; a rotor 22 as a rotating element that is attracted and rotated by the rotating magnetic field; and first and second rotating shafts 23 and 24 that rotate together with the rotor 22. The motor/generator 20 operates as a motor (electric motor) or a generator (power generator) under the control of an inverter 25. The operation of the inverter 25 is controlled by motor/generator control means of an electronic control unit 102 for the motor/generator (which is hereinafter referred to as "motor/generator ECU 102"). The motor/generator ECU 102 obtains the rotational angular velocity of the rotor 22 of the motor/generator 20 (motor rotational angular velocity, electric motor rotational angular velocity) and the rotational speed thereof (motor rotational speed, electric motor rotational speed) based on a detection signal that is received from a rotation sensor (resolver 26) that detects the rotational angular position of the rotor 22.

A secondary battery 27 that supplies and receives DC electric power to and from the inverter 25 is connected to a battery monitoring unit 28 that detects the state of charge (SOC) of the secondary battery 27. The battery monitoring unit 28 sends a detected signal that indicates the state of charge (in other words, a signal that indicates the state of charge amount (SOC amount)) of the secondary battery 27 to the motor/generator ECU 102. The motor/generator ECU 102 includes a battery control means that determines the state of charge of the secondary battery 27 based on the signal to determine whether to charge the secondary battery 27.

The power transmission devices includes: a manual transmission 30 that changes a speed gear from among a plurality of speed gears(gears 31 to 35 and 39), changes the engine torque (engine torque) TE of the engine 10 and motor torque (electric motor torque) TMG of the motor/generator 20 that are input into an input shaft 41 using the changed speed gear, and outputs the torque from an output shaft 42 to the driving wheels WL and WR; a final reduction gear device 50, to which the output torque from the output shaft 42 of the manual transmission 30 is input; and a differential 60 that distributes the rotation torque that has been reduced in speed by the final reduction gear device 50 to the left and right driving shafts (drive shafts) DL and DR.

Here, the manual transmission 30 of this embodiment, which has five forward gears and one reverse gear, has a first speed gear 31, a second speed gear 32, a third speed gear 33, a fourth speed gear 34 and a fifth speed gear 35 as forward speed gears, and a reverse gear 39 as a reverse gear. Each forward speed gear is constituted of a pair of gears, a drive gear on the input shaft 41 and a driven gear on the output shaft 42, which are in mesh with each other. The reverse speed gear is constituted of a drive gear on the input shaft 41, a driven gear on the output shaft 42, and an intermediate gear that is meshed with the drive and driven gears. FIG. 1 shows the configuration of the manual transmission 30 in a simplified fashion, and each of the speed gears is not necessarily arranged as shown in FIG. 1.

In the hybrid vehicle 1 of this embodiment, first and second clutch mechanisms 70 and 80, as shown in FIG. 1, are provided as the first and second clutch mechanisms.

First, the first clutch mechanism 70, which transmits torque between the engine 10 and the motor/generator 20, is a friction clutch device that may be engaged so that the engine output shaft 11 engages a first rotating shaft 23 of the motor/generator 20 and disengaged so that the engine output shaft 11 is disengaged from the first rotating shaft 23. For example, the first clutch mechanism 70 may be a dry- or wet-type single-or multi-plate clutch. Here, a friction disk clutch that has two disk-shaped friction plates as first and second engaging members 71 and 72 and transmits torque between the engine 10 and the motor/generator 20 by the frictional force between the friction plates is used. In the first clutch mechanism 70, the first engaging member 71 is coupled to the engine output shaft 11, and the second engaging member 72 is coupled to the first rotating shaft 23 of the motor/generator 20.

The term "engaged" means that the first engaging member 71 and the second engaging member 72 have been moved toward each other into engagement and torque can be transmitted between the engine output shaft 11 and the first rotating shaft 23. The engagement of the clutch may be divided into a half-engaged stage, which progresses from when the contact between the first engaging member 71 and the second engaging member 72 to synchronization of the rotations of the first engaging member 71 and the second engaging member 72 (i.e., the rotations of the engine output shaft 11 and the first rotating shaft 23), and a completely engaged stage, in which the rotation of the first engaging member 71 is synchronized with that of the second engaging member 72. The term "disengaged" means that the first engaging member 71 has become separated from the second engaging member 72 and torque cannot be transmitted between the engine output shaft 11 and the first rotating shaft 23.

In the first clutch mechanism 70, the transmittable torque capacity (clutch transmitting torque TMC) gradually increases as the clutch transitions from the released state to the half-engaged stage and then to the completely engaged stage. That is, the clutch transmitting torque TMC increases as the pressing force between the first engaging member 71 and the second engaging member 72 increases. The term "transmittable torque capacity (clutch transmitting torque TMC)" means the maximum torque that the first clutch mechanism 70 can transmit from one side to the other. For example, in the first clutch mechanism 70, when the torque input from one side is below the transmittable torque capacity (clutch transmitting torque TMC), the input torque may be transmitted to the other side. However, if the torque input from one side exceeds the transmittable torque capacity (clutch transmitting torque TMC), only torque that is equal to the transmittable torque capacity (clutch transmitting torque TMC) can be transmitted to the other side. The same is true of the second clutch mechanism 80.

Here, the engagement and release of the first clutch mechanism 70 is brought about by means of an actuator 73. That is, the first clutch mechanism 70 is an automatic clutch. The actuator 73, which displaces the first engaging member 71 and the second engaging member 72 relative to each other, may use an electric or hydraulic clutch motor to achieve the relative displacement by, for example, increasing and decreasing the rotational speed and rotation torque. Here, an actuator that displaces the first engaging member 71 is shown as an example. The actuator 73 is controlled by the clutch control means of an electronic control unit 103 for the first clutch mechanism 70 (which is hereinafter referred to as "clutch ECU 103").

The first clutch mechanism 70 may be of the type which, when released, that is, when switched from the engaged stage to the released state, stops the operation of the actuator 73 and separates the first engaging member 71 from the second engaging member 72 using a repulsive force or the like, or actuates the actuator 73 in a direction opposite from the direction in which the actuator 73 is actuated during the engagement process to move the first engaging member 71 until the first engaging member 71 separates from the second engaging member 72.

The second clutch mechanism 80 is next described. The second clutch mechanism 80, which transmits torque between the motor/generator 20 and the manual transmission 30, is a friction clutch device that switches between an engaged stage, in which the first rotating shaft 23 of the motor/generator 20 is engaged with the input shaft 41 of the manual transmission 30 and a released stage, in which the first rotating shaft 23 is disengaged from the input shaft 41 engaged stage. For example, the second clutch mechanism 80 may be a dry- or wet-type single- or multi-plate clutch. Here, a friction disk clutch that has two disk-shaped friction plates as first and second engaging members 81 and 82 and transmits torque between the motor/generator 20 and the manual transmission 30 by the frictional force between the friction plates is used. In the second clutch mechanism 80, the first engaging member 81 is coupled to a second rotating shaft 24 of the motor/generator 20, and the second engaging member 82 is coupled to the input shaft 41 of the manual transmission 30.

Engagement of the second clutch mechanism 80 means that the first engaging member 81 and the second engaging member 82 have been moved to engage each other and that torque may be transmitted between the second rotating shaft 24 and the input shaft 41. In the second clutch mechanism 80, the engagement of the second clutch mechanism may also be roughly divided into a half-engaged stage and a completely engaged stage. The release of the second clutch mechanism means that the first engaging member 81 and the second engaging member 82 are separated from each other and torque cannot be transmitted between the second rotating shaft 24 and the input shaft 41.

Here, the engagement and release of the second clutch mechanism 80 are brought about mechanically via a link mechanism, wire or the like, in response to operation of a clutch pedal 91 by the driver. That is, the second clutch mechanism 80 is a manual clutch that is engaged stage when the driver releases the clutch pedal 91 and disengaged when the driver depresses the clutch pedal 91. The second clutch mechanism 80 is completely engaged stage when the clutch pedal 91 is not depressed. Also, the second clutch mechanism 80 transitions from the completely engaged stage to the half-engaged stage (what is called half clutch position) and then to the released state when the driver depresses the clutch pedal 91. However, the second clutch mechanism 80 transitions from the released state to the half-engaged stage and then to the completely engaged stage when the driver releases the clutch pedal 91.

In the second clutch mechanism 80, as the amount of operation of the clutch pedal 91 toward the engaged stage (engaging operation amount) by the driver increases, in other word, as the operation amount of the clutch pedal 91 toward the released state (releasing operation amount) increases, the pressing force in the second clutch mechanism 80, that is, the degree of engagement of the second clutch mechanism 80, increases and the clutch transmitting torque TMC (transmittable torque capacity) of the second clutch mechanism 80 increases. The operation amount of the clutch pedal 91 may be determined from the position of the clutch pedal 91 detected by a pedal position detection means 92. The clutch pedal position detection means 92 detects the position of the clutch pedal 91 after displacement from the initial position of the clutch pedal 91, at which the clutch pedal is located when it is not operated by the driver.

In addition, the hybrid vehicle 1 includes an electronic control unit 100 that comprehensively controls the operation of the entire vehicle (which is hereinafter referred to as "hybrid ECU 100"). The hybrid ECU 100 supplies and receives information, such as detection signals from various sensors and control commands, to and from the engine ECU 101, the motor/generator ECU 102, and the clutch ECU 103. In this embodiment, a control device for a hybrid vehicle is constituted at least of the hybrid ECU 100, the engine ECU 101, the motor/generator ECU 102, and the clutch ECU 103.

The hybrid vehicle 1 is provided with, as operation modes of the power sources, at least an engine-drive mode in which a driving force is generated from the driving wheels WL and WR only by the output of the engine 10, an EV-drive mode in which a driving force is generated in the driving wheels WL and WR only by the output of the motor/generator 20 as a motor, and a hybrid-drive mode in which a driving force is generated in the driving wheels WL and WR by the outputs of both the engine 10 and the motor/generator 20. In the hybrid vehicle 1, the hybrid ECU 100 includes an operation mode switching means 100a that may be operated by the driver of the hybrid vehicle 1 to switch the operation mode of the power sources, and the operation mode switching means 100a switches the operation mode based on a drive request of the driver to the hybrid vehicle 1 (that is, requested driving force to the hybrid vehicle 1 or the driving wheels WL and WR) that is calculated by drive request calculation means 100b, the state of charge of the secondary battery 27 sent by the motor/generator ECU 102, information on the operating conditions of the vehicle (information such as the vehicle acceleration detected by vehicle acceleration detection means (not shown), the slip of the driving wheels WL and WR detected by wheel slip detection means) and so on.

When the engine-drive mode is selected, the operation mode switching means 100a sends control commands to the engine ECU 101, the motor/generator ECU 102, and the clutch ECU 103 so that the engine 10 generates sufficient engine torque TE to satisfy the requested driving force indicated by the drive request of the driver. In this case, information on the engine torque TE that may satisfy the requested driving force with the current speed gear or the speed gear after a gear change operation, for example, may be sent as the control command to the engine ECU 101. The engine ECU 101 controls the fuel injection amount of the engine 10 and so on so that sufficient engine torque TE is generated. In addition, a control command is sent to the motor/generator ECU 102 to prevent operation of the motor/generator 20 as either a motor or a generator. Also, a control command is sent to the clutch ECU 103 to engage the first clutch mechanism 70 completely. Then, when the second clutch mechanism 80 is engaged, the engine torque TE is transmitted from the first clutch mechanism 70 to the rotor 22 of the motor/generator 20 and then to the second clutch mechanism 80 and is then transmitted to the input shaft 41 of the manual transmission 30. Thus, in the hybrid vehicle 1, the engine torque TE is changed in speed by one of the speed gears (gears 31 to 35 and 39) of the manual transmission 30 and output from the output shaft 42, and the output torque generates a driving force output to the driving wheels WL and WR via the final reduction gear device 50 and the differential 60.

When the hybrid-drive mode is selected, the operation mode switching means 100a sends control commands to the engine ECU 101, the motor/generator ECU 102, and the clutch ECU 103 so that the engine 10 and the motor/generator 20 generate sufficient engine torque TE and motor torque TMG, respectively, to satisfy the requested driving force indicated by the drive request of the driver.

When both the engine torque TE and the motor torque TMG are used in the hybrid-drive mode, information on the engine torque TE and the motor torque TMG that can satisfy the requested driving force with the current speed gear or the speed gear after a gear change operation are sent to the engine ECU 101 and the motor/generator ECU 102 as the control commands. Thus, the engine ECU 101 controls the engine 10 so that the engine torque TE is generated, and the motor/generator ECU 102 controls the amount of power supplied to the motor/generator 20 so that the motor torque TMG is generated. In addition, a control command is sent to the clutch ECU 103 to completely engage the first clutch mechanism 70. Then, when the second clutch mechanism 80 is engaged, the engine torque TE is transmitted to the rotor 22 of the motor/generator 20 via the first clutch mechanism 70 and the engine torque TE is in turn transmitted, together with the motor torque TMG, to the input shaft 41 of the manual transmission 30 via the second clutch mechanism 80. Thus, in the hybrid vehicle 1, driving force is output to the driving wheels WL and WR as the sum of the engine torque TE and the motor torque TMG.

In contrast, when electric power is regenerated in by the motor/generator 20 in the hybrid-drive mode, a control command is sent to the motor/generator ECU 102 to have the motor/generator 20 operate as a generator. Then, when the second clutch mechanism 80 is engaged, the engine torque TE is transmitted to the rotor 22 of the motor/generator 20 via the first clutch mechanism 70 and the portion of the engine torque TE that satisfies the requested driving force is transmitted to the input shaft 41 of the manual transmission 30 via the second clutch mechanism 80 while the remainder of the torque is used to generate electric power by the motor/generator 20. Thus, in the hybrid vehicle 1, a portion of the engine torque TE is used as the driving force output to the driving wheels WL and WR and the remainder is converted into electric power.

When the EV-drive mode is selected, the operation mode switching means 100a sends control commands to the engine ECU 101, the motor/generator ECU 102, and the clutch ECU 103 to ensure that the motor/generator 20 is able to generate sufficient motor torque TMG to provide driving force sufficient to meet the drive request. In this case, information on the motor torque TMG of the motor/generator 20 that satisfies the requested driving force is sent as a control commands to the motor/generator ECU 102. Thus, the motor/generator ECU 102 controls the inverter 25 so that the required motor torque TMG is generated. At this time, a control command is sent to the engine ECU 101 to stop the operation of the engine 10, which improves the fuel economy of the vehicle. A control command is also sent to the clutch ECU 103 to release the first clutch mechanism 70. Then, when the second clutch mechanism 80 is engaged, driving force is supplied to the driving wheels WL and WR only by the motor torque TMG. In the EV-drive mode, a control command may be transmitted to the motor/generator ECU 102 to perform regenerative braking can be carried out when the driver requests a deceleration of the vehicle by, for example, operating the brake.

The hybrid vehicle 1 may be started from a stationary state either by the engine torque TE of the engine 10 or by the motor torque TMG of the motor/generator 20. When the hybrid vehicle 1 is started by the engine torque TE, it is necessary to start the engine 10 while the hybrid vehicle 1 in a stationary state. In addition, in the hybrid vehicle 1, the engine 10 may be started from a resting state during EV driving. For example, when the hybrid vehicle 1 cannot continue EV driving because the amount of electricity stored in the second battery is insufficient, the control to start the engine 10 is executed to switch the operation mode from the EV-drive mode to the engine-drive mode or the hybrid-drive mode when the residual amount of electricity that is stored in the secondary battery 27 decreases to a specified level. Also, in the hybrid vehicle 1, if the requested driving force is increased during EV driving because the driver depresses the accelerator pedal 93, the control to start the engine 10 is executed to switch the operation mode to the engine-drive mode or the hybrid-drive mode to satisfy the requested driving force.

In the control to start the engine 10, the engine start control means 100c of the hybrid ECU 100 sends control commands to the engine ECU 101, the motor/generator ECU 102, and the clutch ECU 103 so that the motor torque TMG of the motor/generator 20 can initiate cranking of the engine 10 from resting state. At this time, a control command is sent from the engine start control means 100c to the engine ECU 101 to execute a fuel injection control and so on to start the engine 10 when the engine rotational angular velocity $\omega E$ reaches a specified value. When the hybrid vehicle 1 is stationary, for example, information on the motor torque TMGest that is sufficient to crank the engine 10 is sent to the motor/generator ECU 102 as a target motor torque TMGt. However, during EV driving, information on the motor torque TMG that has been increased by the amount equal to the motor torque TMGest that is necessary for cranking of the engine 10 is transmitted to the motor/generator ECU 102 as a target motor torque TMGt. The target motor torque TMGt may be set not to exceed the maximum value TMGlim of the motor torque that can be output from the motor/generator 20. In addition, a control command is sent to the clutch ECU 103 to completely engage the first clutch mechanism 70.

In the hybrid vehicle 1 of this embodiment, a clutch mechanism (the second clutch mechanism 80) is interposed between the motor/generator 20 and the power transmission devices, such as the manual transmission 30. Thus, if the degree of engagement of the clutch mechanism increases, the clutch transmitting torque TMC increases and the motor rotational angular velocity $\omega MG$ is decreased by the load (resistive torque of the power transmission device) against the motor torque TMG of the motor/generator 20. At this time, the rotational angular velocity of the power transmission devices increases. The motor rotational angular velocity $\omega MG$ tends to decrease as the degree of engagement of the clutch mechanism increases, that is, the clutch transmitting torque TMC increases.

In the hybrid vehicle 1, an engine start control using the motor torque TMG of the motor/generator 20 may be started when the motor rotational angular velocity ωMG of the motor/generator 20 is low. Then, in the engine start control, because the motor rotational angular velocity ωMG decreases as the degree of engagement of the clutch mechanism increases, which increases the clutch transmitting torque TMC, the engine rotational angular velocity ωE of the engine output shaft 11 may not be able to reach a specified engine rotational angular velocity ωE0 necessary to crank the engine (which is hereinafter referred to as "cranking request engine rotational angular velocity ωE0") and the motor torque TMGest cannot be able to be transmitted to the engine output shaft 11. In particular, if the engagement speed of the clutch mechanism is high, the motor rotational angular velocity ωMG may be immediately decreased as compared with the case where the clutch mechanism is engaged slowly, making it difficult to secure the cranking request engine rotational angular velocity ωE0 and the motor torque TMGest.

When the degree of engagement of the clutch mechanism is low, that is, when the clutch transmitting torque TMC of the clutch mechanism is low (for example, when the clutch mechanism is in a half-engaged stage in which the pressing force between the engaging members of the clutch mechanism is low), the degree of engagement of the clutch mechanism is low enough (the clutch transmitting torque TMC is low enough) that the motor rotational angular velocity ωMG may be maintained at least at a specified motor rotational angular velocity ωMG0 sufficient to crank the engine 10 at startup (which is hereinafter referred to as "cranking request motor rotational angular velocity ωMG0"). Thus, if the degree of engagement of the clutch mechanism is low (when the clutch transmitting torque TMC is low), because the motor rotational angular velocity ωMG may be maintained at least at the cranking request motor rotational angular velocity ωMG0, the engine rotational angular velocity ωE may be increased to the cranking request engine rotational angular velocity ωE0 and the motor torque TMGest is transmitted to the engine output shaft 11 by controlling the first clutch mechanism 70 in the released state to the engaged stage. Thereafter, the engine 10 may be started by performing fuel injection control and so on. Because only the first clutch mechanism 70 is interposed between the engine 10 and the motor/generator 20, the cranking request motor rotational angular velocity ωMG0 is equal to the cranking request engine rotational angular velocity ωE0.

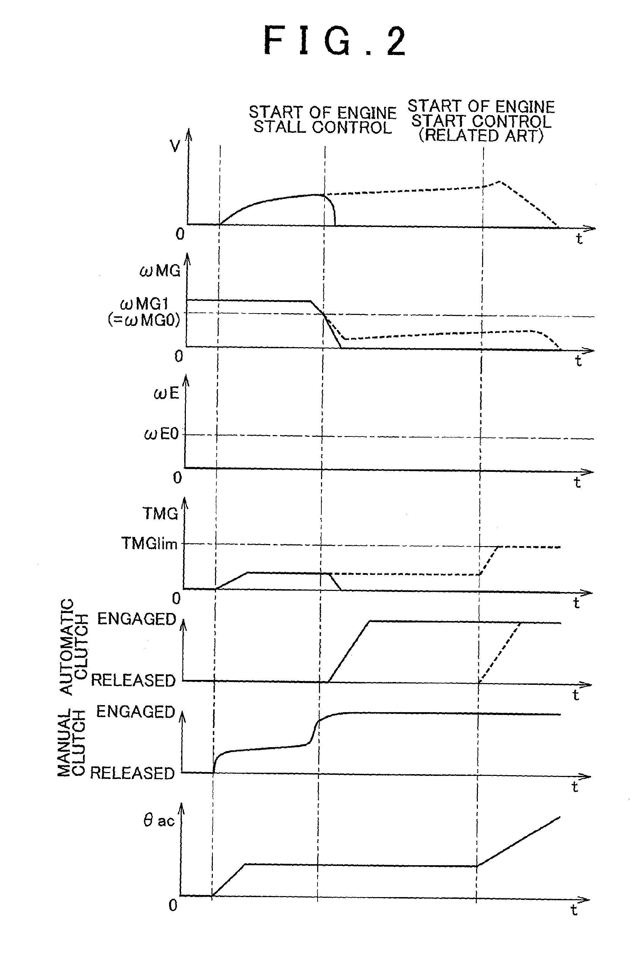

In contrast, when the degree of engagement of the clutch mechanism is higher than that in the above case, that is, the clutch transmitting torque TMC of the clutch mechanism exceeds that in the above case (for example, when the clutch mechanism is half-engaged and the pressing force between the engaging members of the clutch mechanism is high), the degree of engagement is high enough (the clutch transmitting torque TMC is high enough) that the motor rotational angular velocity ωMG falls below the cranking request motor rotational angular velocity ωMG0. Thus, when the degree of engagement of the clutch mechanism is high (when the clutch transmitting torque TMC is high), because the motor rotational angular velocity ωMG falls below the cranking request motor rotational angular velocity ωMG0, it is difficult to increase the engine rotational angular velocity ωE to the cranking request engine rotational angular velocity ωE0, even if the first clutch mechanism 70 is controlled to engage and all of the motor torque TMGest cannot be transmitted to the engine output shaft 11. Thus, in this case, the engine 10 cannot be started or it takes long to start the engine 10. Specifically, it may be difficult to start the engine 10 even if the first clutch mechanism 70 is engaged when the motor rotational angular velocity ωMG remains below the cranking request motor rotational angular velocity ωMG0 as indicated by the broken line in FIG. 2. Also, even if the motor rotational angular velocity ωMG, which has been maintained below the cranking request motor rotational angular velocity ωMG0, increases after synchronization with the power transmission device , the motor rotational angular velocity ωMG to increase and prolonged cranking may be required to start the engine 10.

Therefore, in this embodiment, the control device for a hybrid vehicle in which a clutch mechanism (the second clutch mechanism 80) is interposed between the motor/generator 20 and the power transmission devices, such as the manual transmission 30, is able to start the engine 10 properly using the motor torque TMG of the motor/generator 20.

When the clutch mechanism (the second clutch mechanism 80) is in the released state, because all of the motor torque TMG that is output from the motor/generator 20 is transmitted to the engine output shaft 11, the engine rotational angular velocity ωE of the engine output shaft 11 may be easily increased to the cranking request engine rotational angular velocity ωE0 so that the engine 10 is started.

As described above, the engine 10 is difficult to start when the motor rotational angular velocity ωMG is below the cranking request motor rotational angular velocity ωMG0. Thus, to start the engine 10 properly, the motor rotational angular velocity ωMG must be adjusted to be equal to or higher than the cranking request motor rotational angular velocity ωMG0. Thus, the hybrid ECU 100 of this embodiment includes a motor rotational angular velocity adjusting means that maintains the motor rotational angular velocity ωMG at least at the cranking request motor rotational angular velocity ωMG0 in a situation in which it is difficult to properly start the engine 10 during EV driving.

For example, a decrease in the motor rotational angular velocity ωMG may be prevented by decreasing the degree of engagement of the clutch mechanism between the motor/generator 20 and the manual transmission 30, in other words, by decreasing the clutch transmitting torque TMC of the clutch mechanism. Thus, the motor rotational angular velocity adjusting means is configured to reduce the degree of engagement of the clutch mechanism to decrease the clutch transmitting torque TMC so that the motor rotational angular velocity ωMG may be maintained at least at the cranking request motor rotational angular velocity ωMG0. That is, the motor rotational angular velocity adjusting means, which may be referred to as a clutch transmitting torque adjusting means, adjusts the clutch transmitting torque TMC of the clutch mechanism. Here, the clutch transmitting torque TMC is reduced to such a level that the motor rotational angular velocity ωMG can be maintained at least at the cranking request motor rotational angular velocity ωMG0, in other words, the engine rotational angular velocity ωE increases to the cranking request engine rotational angular velocity ωE0 and the motor torque TMGest is transmitted to the engine output shaft 11 when the first clutch mechanism 70 is engaged.

The hybrid vehicle 1 of this embodiment is equipped with a manual clutch (the second clutch mechanism 80) between the motor/generator 20 and the manual transmission 30. Thus, to maintain the motor rotational angular velocity ωMG at least at the cranking request motor rotational angular velocity ωMG0, it is necessary to have the driver depress the clutch pedal 91 to decrease the degree of engagement of the second clutch mechanism 80 and thereby decrease the clutch transmitting torque TMC. Thus, the motor rotational angular velocity adjusting means (clutch transmitting torque adjusting means) may be constituted as alerting means that alerts the driver to depress the clutch pedal 91, in other words, to reduce the degree of engagement of the second clutch mechanism 80 and thereby decrease the clutch transmitting torque TMC. The alert may be conveyed to the driver through sound, voice sound, or text.

The driver of a vehicle equipped with the manual transmission 30 may determine that the engine is about to stall, from the indication of an engine rotational angular velocity meter (i.e., tachometer), that the engine rotational angular velocity ωE (engine rotational speed NE) falls below a certain rotational angular velocity (rotational speed). Thus, if the driver makes such a determination, the driver may depress the clutch pedal to avoid stalling the engine. Further, when the driver takes action to avoid stalling the engine on the occasion of a clutch pedal releasing operation (clutch engaging operation), the driver may determine that the clutch engaging operation is too quick and release the clutch pedal slowly (i.e., engages the clutch slowly) to avoid an engine stall after a clutch pedal depressing operation (clutch releasing operation). Under similar circumstances, the driver of the hybrid vehicle 1 of this embodiment takes a similar engine stall avoidance action. That is, because the hybrid vehicle 1 of this embodiment can hardly make the driver aware of to which operation mode the current running conditions are attributed, the driver determines that the engine is about to stall regardless of the current operation mode when the driver realizes that the engine rotational angular velocity ωE (engine rotational speed NE) indicated by an engine rotational angular velocity meter 96 falls below a specified engine stall determining rotational angular velocity (engine stall determining rotational speed), and depresses the clutch pedal 91. Thus, in this embodiment, to utilize the behavioral characteristics of the drivers of manual transmission vehicles, a state immediately before an engine stall that is similar to that in the engine-drive mode is imitated as needed, even during EV driving, to prompt the driver to take an engine stall avoidance action in order to reduce the clutch transmitting torque TMC of the second clutch mechanism 80 (manual clutch) to a specified value or lower to thereby adjust the motor rotational angular velocity ωMG to be equal to or higher than the cranking request motor rotational angular velocity ωMG0. In this case, the engine rotational angular velocity ωE that is indicated by the engine rotational angular velocity meter 96 serves as the above-described alerting information for the driver. Thus, the motor rotational angular velocity adjusting means (clutch transmitting torque adjusting means) described here is configured to have a function of creating a state immediately before an engine stall during EV driving and a function of making the driver aware of the state immediately before an engine stall and to adjust the motor rotational angular velocity ωMG by fulfilling these functions.

First, the hybrid ECU 100 of this embodiment includes an engine rotational angular velocity meter display means 100d that converts the motor rotational angular velocity ωMG (motor rotational speed NMG) into the engine rotational angular velocity ωE (engine rotational speed NE) and displays the value on the engine rotational angular velocity meter 96 during EV driving. In this embodiment, because only the first clutch mechanism 70 is interposed between the engine 10 and the motor/generator 20, the motor rotational angular velocity ωMG displayed remains unchanged as the engine rotational angular velocity ωE once the first clutch mechanism 70 is completely engaged. The engine rotational angular velocity meter display means 100d displays the engine rotational angular velocity ωE (engine rotational speed NE) that is calculated based on a detection signal from the crank angle sensor 12 when the operation mode is in the engine-drive mode.

The hybrid ECU 100 of this embodiment is also provided with engine stall control means 100e that imitates an engine stall state that may occur in the engine-drive mode by stopping the output of the motor/generator 20 to reduce the motor rotational angular velocity ωMG (motor torque TMG) when the motor rotational angular velocity ωMG during EV driving falls below the motor rotational angular velocity ωMG1 at the start of specified engine stall control. The engine stall control is executed when the degree of engagement of the second clutch mechanism 80 is increased by a clutch engaging operation of the driver and consequently the motor rotational angular velocity ωMG decreases to such a level that it is difficult to start the engine 10. Thus, at the start of the engine stall control the cranking request motor rotational angular velocity ωMG0 is set as the motor angular velocity ωMG1.

That is, the motor rotational angular velocity adjusting means (clutch transmitting torque adjusting means) is constituted of the engine rotational angular velocity meter display means 100d and the engine stall control means 100e. The operation of the engine rotational angular velocity meter display means 100d and the engine stall control means 100e are described in detail below.

In the hybrid vehicle 1, the driver releases the clutch pedal 91 while depressing the accelerator pedal 93 so that the accelerator pedal operation amount θac (accelerator pedal operation amount θac>0) increases as the second clutch mechanism 80 (manual clutch) starts to be engaged, as shown in FIG. 2, for example. At this time, in the hybrid vehicle 1, EV driving control means 100f sends a control command to the motor/generator ECU 102 to increase the motor torque TMG of the motor/generator 20 in proportion to the accelerator pedal operation amount θac to start EV driving. The accelerator pedal operation amount θac is obtained using a detection signal from accelerator operation amount detection means 94 that detects the pedal position (i.e., depression amount) of the accelerator pedal 93 or the accelerator pedal operation amount directly. The engine rotational angular velocity meter display means 100d of this embodiment converts the motor rotational angular velocity ωMG into the engine rotational angular velocity ωE and displays the converted value on the engine rotational angular velocity meter 96 during EV driving.

In the hybrid vehicle 1, when the driver performs a clutch engaging operation during EV driving, the degree of engagement of the second clutch mechanism 80 increases and the clutch transmitting torque TMC increases, which in turn may decrease the motor rotational angular velocity ωMG of the motor/generator 20 as shown in FIG. 2. Here, when the motor rotational angular velocity ωMG falls below the motor rotational angular velocity ωMG1 at the start of the engine stall control (= cranking request motor rotational angular velocity ωMG0), the engine stall control means 100e sends a control command to the motor/generator ECU 102 to execute the engine stall control. Then, the motor/generator ECU 102 stops the output of the motor/generator 20 to create an engine stall state that is similar to that in the engine-drive mode to reduce the motor rotational angular velocity ωMG (motor torque TMG). During the engine stall control, the engine rotational angular velocity meter 96 indicates the engine rotational angular velocity ωE that corresponds to the reduced motor rotational angular velocity ωMG. The actual engine rotational angular velocity ωE is 0 because the engine 10 is stopped. The engine rotational angular velocity ωE that is indicated by the engine rotational angular velocity meter 96 decreases in the same manner as when the engine 10 stalls. Thus, the driver can determine, without a sense of discomfort, that the engine is about to stall when the engine rotational angular velocity ωE that is indicated by the engine rotational angular velocity meter 96 falls below the engine stall rotational angular velocity, even during EV driving. Also, at that time, because the vehicle speed V also decreases, the driver can determine, based on the decrease in the vehicle speed V, that the engine is about to stall.

However, the driver may continue to depress the clutch pedal 91 and maintain the degree of engagement of the second clutch mechanism 80 at a high level or even increase it as shown in FIG. 2 despite the fact that a state immediately before an engine stall has been created. In this case, the engine stall control means 100e continues the engine stall control and creates an engine stall state by reducing the motor rotational angular velocity ωMG (motor torque TMG) to 0 as shown in FIG. 2. At this time, the engine stall control means 100e may cause the clutch ECU 103 to engage the first clutch mechanism 70 (automatic clutch) to create an engine stall state that is closer to an actual engine stall state in the engine-drive mode.

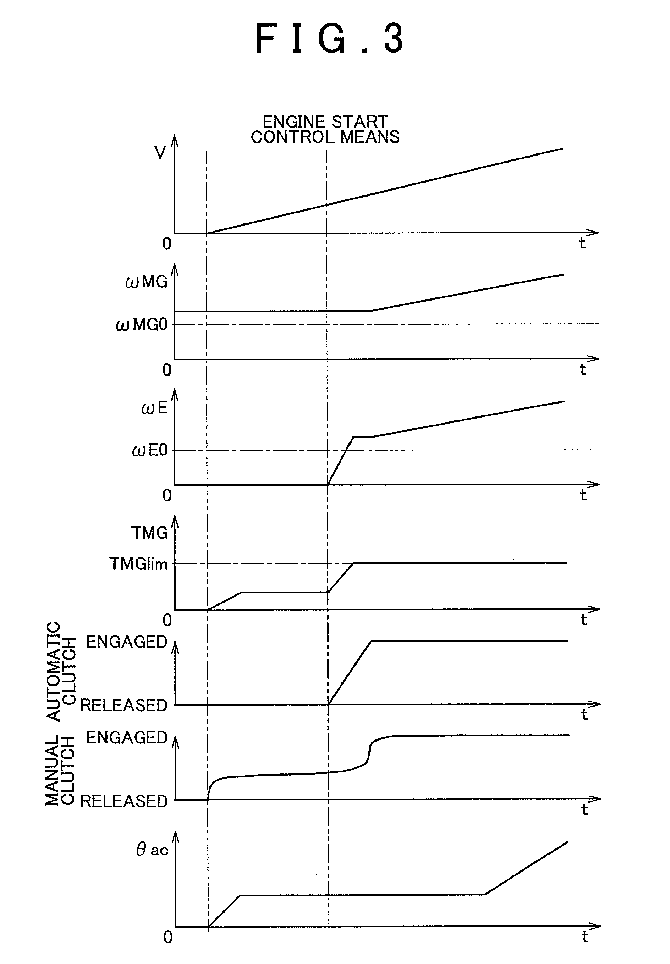

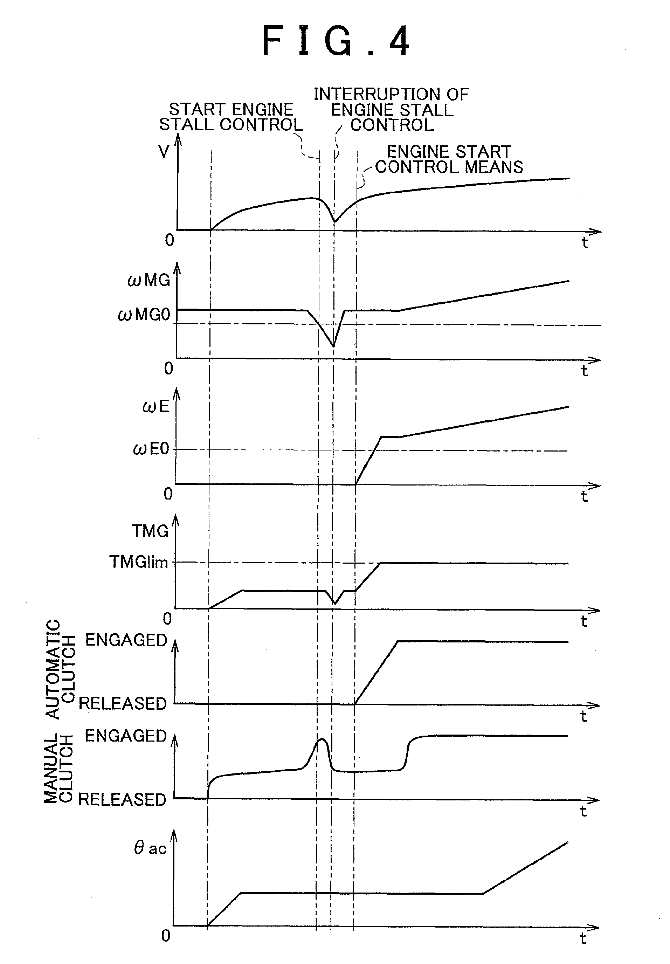

However, in the hybrid vehicle 1, if the degree of engagement of the second clutch mechanism 80 is low, as shown in FIG. 3, a decrease in the motor rotational angular velocity ωMG during EV driving may be prevented. Thus, if an engine start request is made while the degree of engagement is low, the engine rotational angular velocity ωE may be increased by controlling the first clutch mechanism 70 to engage if the motor rotational angular velocity ωMG exceeds the cranking request motor rotational angular velocity ωMG0. Accordingly, the motor torque TMG is increased to prevent the motor rotational angular velocity ωMG from decreasing. That is, when the degree of engagement of the second clutch mechanism 80 is low, the engine 10 may be started by performing fuel injection control or the like because the motor rotational angular velocity ωMG that is s needed to crank the engine 10 (= cranking request motor rotational angular velocity ωMG0) may be secured and the engine rotational angular velocity ωE may be increased to the cranking request engine rotational angular velocity ωE0. Thus, in the hybrid vehicle 1, because the driver depresses the clutch pedal 91 when the driver determines that engine is about to stall as a result of engine stall control, the degree of engagement of the second clutch mechanism 80 (manual clutch) starts decreasing as shown in FIG. 4. That is, by the driver's action of depressing the clutch pedal 91 to avoid stalling the engine, the clutch transmitting torque TMC in the second clutch mechanism 80 starts decreasing. Then, in the hybrid vehicle 1, when the degree of engagement of the second clutch mechanism 80 has decreased to a specified value and the clutch transmitting torque TMC decreases to a specified value, the engine stall control means 100e ends the engine stall control. As a result, because the motor rotational angular velocity ωMG increases and the motor torque TMG increases, the engine 10 may be started by performing fuel injection control or the like. The specified value may be set to a value at which the engine stall control is not started, for example.

As described here, in this embodiment, the engine rotational angular velocity meter display means 100d and the engine stall control means 100e serve as the motor rotational angular velocity adjusting means. The motor rotational angular velocity adjusting means (the engine rotational angular velocity meter display means 100d and the engine stall control means 100e) restrains the driver from releasing the clutch pedal 91 (clutch engaging operation) in order to maintain the motor rotational angular velocity ωMG at least at the cranking request motor rotational angular velocity ωMG0 during EV driving.

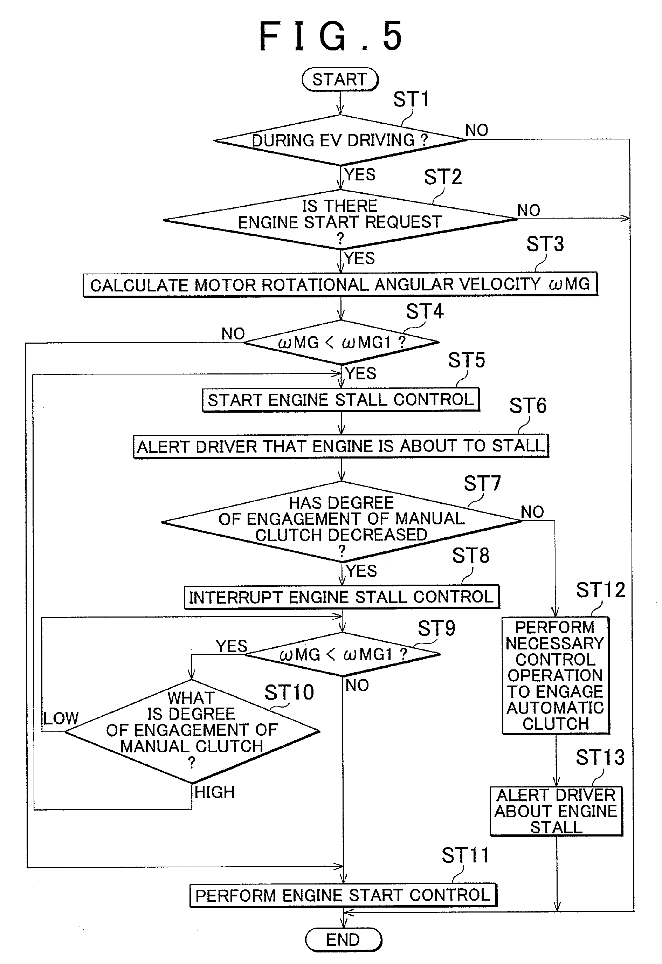

An engine start operation of the control device for a hybrid vehicle during EV driving is described below based on the flowchart of FIG. 5.

First, the engine start control means 100c determines whether the hybrid vehicle 1 is running in the EV-drive mode (step ST1). This determination may be made based on the control commands that the hybrid ECU 100 sent to the engine ECU 101, the motor/generator ECU 102, and the clutch ECU 103, for example.

Here, if it is determined that the hybrid vehicle 1 is not running in the EV-drive mode, the control is ended because the engine 10 has already been started or the vehicle is stationary. If it is determined that the hybrid vehicle 1 is running in the EV-drive mode, the engine start control means 100c determines whether an engine start request is made in conjunction with either a decrease in the amount of electricity that is stored in the secondary battery 27 or an increase in the requested driving force due to operation of the accelerator operation (step ST2).

If there is no engine start request, the engine start control means 100c ends the control. If it is determined that an engine start request is made, the engine stall control means 100e obtains the current motor rotational angular velocity ωMG of the motor/generator 20 (step ST3).

The motor rotational angular velocity ωMG can be determined based, for example, on the motor torque TMG that is output from the motor/generator 20, the clutch transmitting torque TMC of the second clutch mechanism 80 (manual clutch), and the moment of inertia I of the motor/generator 20. That is, because the rotational angular acceleration dωMG/dt of the motor/generator 20 may be determined based on Equation 1 below, the motor rotational angular velocity ωMG may be obtained from the rotation angular acceleration dωMG/dt.

$$d\omega MG/dt = (TMG - TMC)/I \dots (1)$$

The information on the requested motor torque that the hybrid ECU 100 sends to the motor/generator ECU 102 may be used as the motor torque TMG. Also, because the clutch transmitting torque TMC of the second clutch mechanism 80 proportional to the amount by which the driver depresses the clutch pedal 91, i.e., the position of the clutch pedal 91, it may be obtained using a detection signal from the clutch pedal position detection means 92.

As for the motor rotational angular velocity ωMG, a value that is obtained using a detection signal from the resolver 26 (rotational angular position of the rotor 22) may be used.

Next, the engine stall control means 100e determines whether the motor rotational angular velocity ωMG is lower than the motor rotational angular velocity ωMG1 at the start of the engine stall control (here, the cranking request motor rotational angular velocity ωMG0) (step ST4).

If the degree of engagement of the second clutch mechanism 80 (manual clutch) increases as shown in FIGs. 2 and 4, for example, the clutch transmitting torque TMC of the second clutch mechanism 80 increases and the motor rotational angular velocity ωMG starts decreasing. Then, the motor rotational angular velocity ωMG may continue to decrease until it falls below the motor rotational angular velocity ωMG1 at the start of the engine stall control (= cranking request motor rotational angular velocity ωMG0). Thus, if it is determined that the motor rotational angular velocity ωMG is below the motor rotational angular velocity ωMG1 at the start of the engine stall control, the engine stall control means 100e stops the motor torque output of the motor/generator 20 and sends a control command to the motor/generator ECU 102 to reduce the motor rotational angular velocity ωMG (motor torque TMG) and start engine stall control (step ST5).

Through the engine stall control, the motor torque TMG decreases with decrease in the motor rotational angular velocity ωMG and the vehicle speed V starts decreasing. Then, the engine rotational angular velocity meter display means 100d converts the reduced motor rotational angular velocity ωMG into an engine rotational angular velocity ωE and displays the converted value on the engine rotational angular velocity meter 96. Accordingly, the decrease in the vehicle speed V (i.e., decrease in vehicle acceleration) and the display on the engine rotational angular velocity meter 96 function as the alerting information and alert the driver that the engine is about to stall (step ST6).

If the driver realizes that an engine is about to stall and depresses the clutch pedal 91, the degree of engagement of the second clutch mechanism 80 (manual clutch) decreases as shown in FIG. 4, for example, and the clutch transmitting torque TMC of the second clutch mechanism 80 decreases. Then, the decrease in the clutch transmitting torque TMC triggers an increase in the motor rotational angular velocity ωMG and an increase in the motor torque TMG. However, an increase in the motor rotational angular velocity ωMG and an increase in the motor torque TMG do not occur because the engine stall control is being performed.

Thus, the engine stall control means 100e first determines whether the degree of engagement of the second clutch mechanism 80 (manual clutch) has decreased (step ST7). In step ST7, the degree of engagement of the second clutch mechanism 80 may be determined to have decreased if it is determined that the clutch pedal 91 is being depressed based on a detection signal from the clutch pedal position detection means 92, for example. Then, if it is determined that the degree of engagement of the second clutch mechanism 80 has decreased, the engine stall control means 100e determines that the driver is performing an engine stall avoidance operation and interrupts the engine stall control (step ST8). With the interruption of the engine stall control, the EV driving control means 100f increases the motor torque TMG to the requested motor torque before the start of the engine stall control. As a result, the motor rotational angular velocity ωMG starts increasing as shown in FIG. 4.

Next, the engine stall control means 100e determines again whether the motor rotational angular velocity ωMG is below the motor rotational angular velocity ωMG1 at the start of the engine stall control (= cranking request motor rotational angular velocity ωMG0) (step ST9).

If the motor rotational angular velocity ωMG is still below the motor rotational angular velocity ωMG1 at the start of the engine stall control, the engine stall control means 100e determines whether the degree of engagement of the second clutch mechanism 80 (manual clutch) is high or low (step ST10). The determination in step ST10 may be based on a detection signal from the clutch pedal position detection means 92, for example.

If it is determined in step ST10 that the degree of engagement of the second clutch mechanism 80 is low, the engine stall control means 100e determines that the driver is continuing the engine stall avoidance operation, and returns to step ST9. Then, if it is determined, in step ST9, that the motor rotational angular velocity ωMG has increased to the motor rotational angular velocity ωMG1 at the start of the engine stall control (= cranking request motor rotational angular velocity ωMG0) or higher, the engine start control means 100c determines that it is possible to increase the engine rotational angular velocity ωE to the cranking request engine rotational angular velocity ωE0, and sends control commands to the engine ECU 101, the motor/generator ECU 102, and the clutch ECU 103 so that the necessary control to start the engine 10 may be executed (step ST11). In step ST11, the engine ECU 101 performs fuel injection control of the engine 10 or the like and the motor/generator ECU 102 increases the motor torque TMGest that is necessary to crank the engine 10 using the maximum value TMGlim as an upper limit, for example. Also, the clutch ECU 103 engages the first clutch mechanism 70 (automatic clutch).

As described above, the control device for a hybrid vehicle of according to this embodiment creates a state immediately before an engine stall, similar to that in the engine-drive mode, even during EV driving to prompt the driver to depress the clutch pedal 91 (clutch releasing operation) to reduce the clutch transmitting torque TMC of the second clutch mechanism 80 (manual clutch). Also, at this time, if the clutch engaging operation speed of the driver is high, the control device prompts the driver to release the clutch and engage the clutch again more slowly to reduce the clutch transmitting torque TMC. Thus, the control device enables the motor rotational angular velocity ωMG (motor torque TMGest) of the motor/generator 20 that is sufficient to crank the engine 10 to be secured and therefore enables the engine 10 to be started properly during EV driving. Also, because the control device enables the motor rotational angular velocity ωMG (motor torque TMGest) that is sufficient to crank the engine 10 to be secured, the rate of increase in the engine rotational angular velocity ωE may be increased and prolongation of the time to start the engine 10 caused by prolonged cranking can be prevented as compared with related technical fields.

In the above step ST10, if it is determined that the degree of engagement of the second clutch mechanism 80 is high, the engine stall control means 100e determines that the driver has changed his action from depressing the clutch pedal 91 to releasing it, and the clutch transmitting torque TMC of the second clutch mechanism 80 has increased again. The process then returns to step ST5 and starts engine stall control again. In this case, if it is determined again, in step ST7, that the degree of engagement of the second clutch mechanism 80 has decreased, the engine stall control means 100e determines that the driver is performing an engine stall avoidance operation again, interrupts the engine stall control, and the process proceeds to the step ST9. In contrast, if it is determined, in step ST7, that the degree of engagement of the second clutch mechanism 80 has not decreased, the engine stall control means 100e sends a control command to the clutch ECU 103 to engage the first clutch mechanism 70 (automatic clutch) (step ST12), and, when an engine stall state (motor rotational angular velocity ωMG=0) is created, as shown in FIG. 2, the driver is alerted of the fact (step ST13). The alert that is conveyed to the driver in this step ST13 is the information on stopping of the vehicle, or the information that is displayed on the engine rotational angular velocity meter 96 and indicates the fact that the engine rotational angular velocity ωE=0, i.e., the motor rotational angular velocity ωMG=0.

As described above, the control device for a hybrid vehicle of this embodiment executes an engine stall control by forcibly decreasing the motor rotational angular velocity ωMG by stopping the output of the motor/generator 20 to create a state immediately before an engine stall, similar to that in the engine-drive mode, even during EV driving when the motor rotational angular velocity ωMG is decreased due to a clutch engaging operation of the driver during EV driving. Then, the control device allows the motor rotational angular velocity ωMG to decrease to 0 to create an engine stall state, similar to that in the engine-drive mode, even during EV driving when the motor rotational angular velocity ωMG does not increase in the state immediately before an engine stall. Thus, because the control device enables the hybrid vehicle 1 to exhibit a similar state immediately before an engine stall or a similar engine stall state in each operation mode, it can prompt the driver to perform the same clutch operation regardless of whether the operation mode is in the engine-drive mode or the EV-drive mode.

In step ST4, if it is determined that the motor rotational angular velocity ωMG is equal to or higher than the motor rotational angular velocity ωMG1 at the start of the engine stall control, the engine start control means 100c determines that a sufficient motor rotational angular velocity ωMG (motor torque TMGest) to crank the engine 10 is secured and there is no need to simulate engine stalling, and proceeds to step ST11 to execute the necessary control to start the engine 10.

In the embodiment described above, because the motor rotational angular velocity ωMG (motor torque TMGest) needed to crank the engine 10 cannot be secured when the clutch transmitting torque TMC of the second clutch mechanism 80 is high during EV driving, a state immediately before an engine stall, similar to that in the engine-drive mode, is created by reducing the motor rotational angular velocity ωMG (reducing the motor torque TMG). Then, because it is difficult to start the engine 10 when the clutch transmitting torque TMC is still high, an engine stall state is created by further reducing the motor rotational angular velocity ωMG (reducing the motor torque TMG). In contrast, because the control device can prompt the driver to depress the clutch pedal 91 by simulating a state immediately before an engine stall, when the clutch transmitting torque TMC decreases as a result of the depressing operation, the motor rotational angular velocity ωMG needed to crank the engine 10 (= cranking request motor rotational angular velocity ωMG0) and the motor rotational angular velocity ωMG needed to crank the engine 10 (motor torque TMGest) are secured and the engine 10 can be started.

In the above embodiment, when the motor rotational angular velocity ωMG cannot be maintained at or above the cranking request motor rotational angular velocity ωMG0 during EV driving, the rotational angular velocity of the second engaging member 82 on the manual transmission 30 side in the second clutch mechanism 80 is below the rotational angular velocity of the first engaging member 81 and therefore the rotational angular velocity of the first engaging member 81 (i.e., the motor rotational angular velocity ωMG) decreases upon engagement with the second engaging member 82, and one typical case is when the vehicle speed V is low. In contrast, when the rotational angular velocity of the second engaging member 82 exceeds the rotational angular velocity of the first engaging member 81, i.e., when the vehicle speed V is high, a decrease in the rotational angular velocity of the first engaging member 81 (motor rotational angular velocity ωMG) may be prevented because the rotational angular velocity of the first engaging member 81 is rotated by the rotational angular velocity of the second engaging member 82 when the first engaging member 81 engages with the second engaging member 82. Thus, in such a case, the motor rotational angular velocity ωMG may be maintained at or above the cranking request engine rotational angular velocity ωE0 so that the engine 10 may be started.

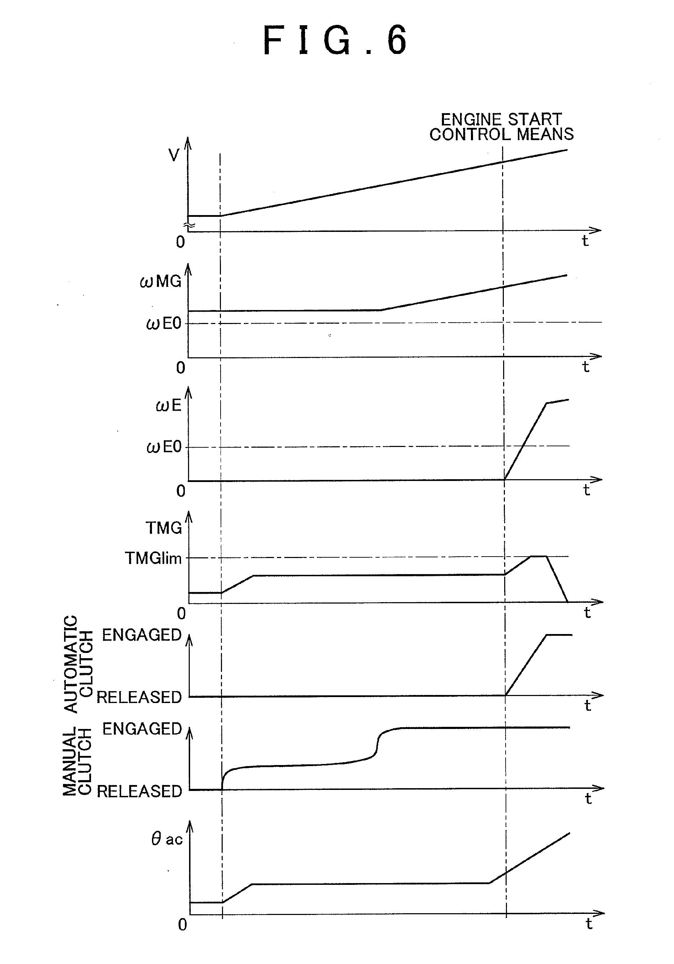

For example, if the driver performs a gear change operation, a clutch engaging operation and depression of the accelerator pedal 93 during EV driving at a constant high vehicle speed V as shown in FIG. 6, the motor rotational angular velocity ωMG starts increasing when the second clutch mechanism 80 (manual clutch) is completely engaged. In this case, because the rotational angular velocity of the second engaging member 82 in the second clutch mechanism 80 is high and because the rotational angular velocity of the first engaging member 81 is high and the motor rotational angular velocity ωMG is high as a result of the complete engagement of the second clutch mechanism 80, the motor rotational angular velocity ωMG may be maintained equal to or higher than the cranking request engine rotational angular velocity ωE0 even if the first clutch mechanism 70 (automatic clutch) is controlled to be engaged with the start of the subsequent engine start control. Thus, in this case, if the first clutch mechanism 70 is controlled to be engaged and the motor torque TMG is increased with the start of the engine start control, the engine rotational angular velocity ωE may be increased to the cranking request engine rotational angular velocity ωE0 and the engine 10 can be started.

Furthermore, in the above embodiment, because the engine stall control that is performed when there is an engine start request during EV is described, the motor rotational angular velocity ωMG1 at the start of the engine stall control is set to the cranking request motor rotational angular velocity ωMG0. However, in an engine-drive mode of a manual transmission vehicle, the engine may go into a state immediately before an engine stall or an engine stall state when the engine rotational angular velocity ωE decreases for reasons such as deceleration and mismatch between the inclination of the climbing lane and the gear of the manual transmission. Taking this point into consideration, a state immediately before an engine stall or an engine stall state that is similar to that in the engine-drive mode may be created when a decelerating state or the like that is similar to that in the above cases is established during EV driving. Thus, to allow the engine stall control to be performed in the cases as described above, the motor rotational angular velocity ωMG that is converted from the engine rotational angular velocity ωE immediately before the engine 10 starts to go into an engine stall state in the engine-drive mode, that is, the motor rotational angular velocity ωMG that is converted from the engine stall determining rotational angular velocity on the engine rotational angular velocity meter 96 of which the driver is aware, may be set as the motor rotational angular velocity ωMG1 at the start of engine stall control. Then, the driver can perform a clutch operation with less awareness of the operation mode of the vehicle.

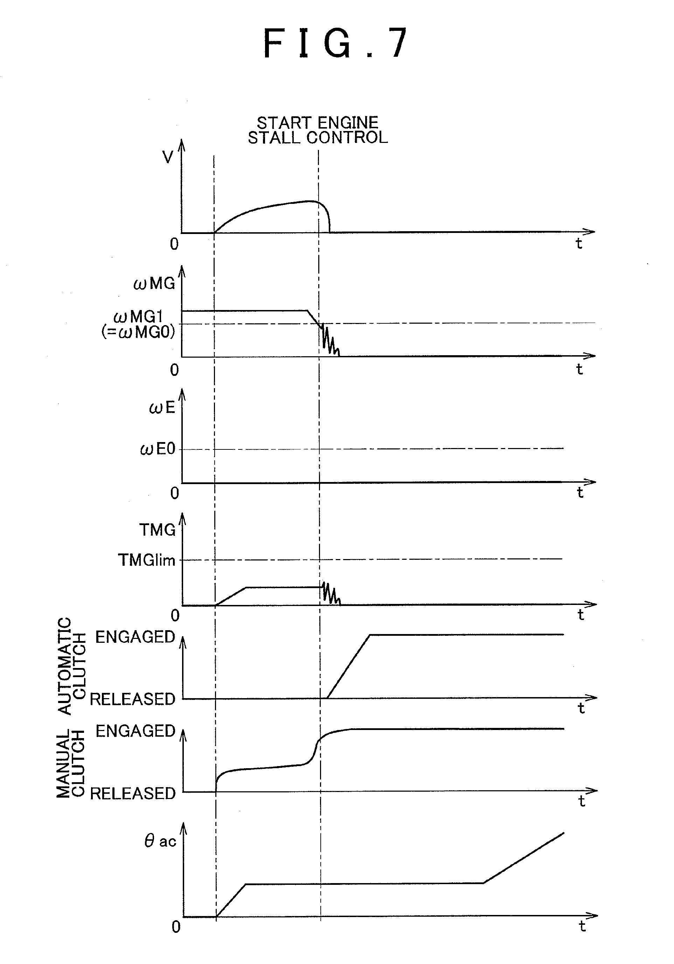

Although it is described in the above embodiment that the driver becomes aware of a state immediately before an engine stall based on a decrease in the engine rotational angular velocity ωE (engine rotational speed NE) that is indicated by the engine rotational angular velocity meter 96 or a decrease in the vehicle acceleration, the driver may also be made aware that the engine is about to stall because the driver feels a distinctive vibration that is transmitted to his body when actually driving in the engine-drive mode. Thus, the engine stall control means 100e may be configured to generate a vibration similar to that which is generated when the engine is about to stall in the engine-drive mode simultaneously with or independently from a decrease in the motor rotational angular velocity ωMG as shown in FIG. 7 when the clutch transmitting torque TMC of the second clutch mechanism 80 is so high that the motor rotational angular velocity ωMG cannot be maintained equal to or higher than the cranking request motor rotational angular velocity ωMG0 when an engine start request is made during EV driving. In this case, the hybrid vehicle 1 includes a vibration generation means. Here, the motor/generator 20 is used as the vibration generation means, and the change in the output of the motor/generator 20 is increased. That is, the vibration is generated by repeatedly increasing and decreasing the motor torque TMG of the motor/generator 20. Thus, because the driver can become aware of the state immediately before an engine stall more properly, the likelihood that the driver will depress the clutch pedal 91 (clutch releasing operation) increases. As a result, the engine 10 can be started more properly and the prolongation of the time that is necessary to start the engine 10 can be prevented more properly.

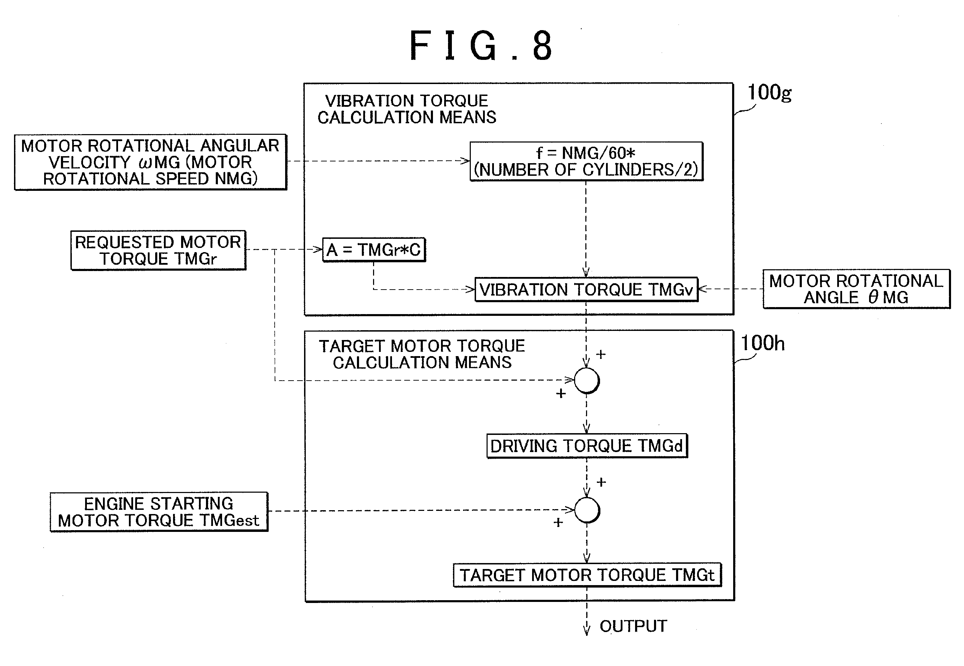

Specifically, the hybrid ECU 100 in this case includes a vibration torque calculation means 100g, as shown in FIG. 8, that calculates the motor torque TMGv that generates a vibration with a frequency f and an amplitude A (which is hereinafter referred to as "vibration torque TMGv"). The vibration torque TMGv has characteristics that are a combination of the engine output characteristics in the state immediately before an engine stall and the damper characteristics of an inertia damper system of the engine 10. The vibration torque calculation means 100g obtains a vibration torque TMGv with a frequency f and an amplitude A that is suitable for the characteristics.

The frequency f refers to a frequency that relates to the engine torque pulsation in the state immediately before an engine stall, and can be obtained from the current motor rotational angular velocity ωMG (motor rotational speed NMG) and the number of cylinders of the engine 10. For example, the vibration torque calculation means 100g substitutes the current motor rotational speed NMG (rpm) into equation 2 below to obtain the frequency f that relates to the engine torque pulsation in the state immediately before an engine stall.

$$f = NMG/60 * (\text{number of cylinders}/2) \dots (2)$$

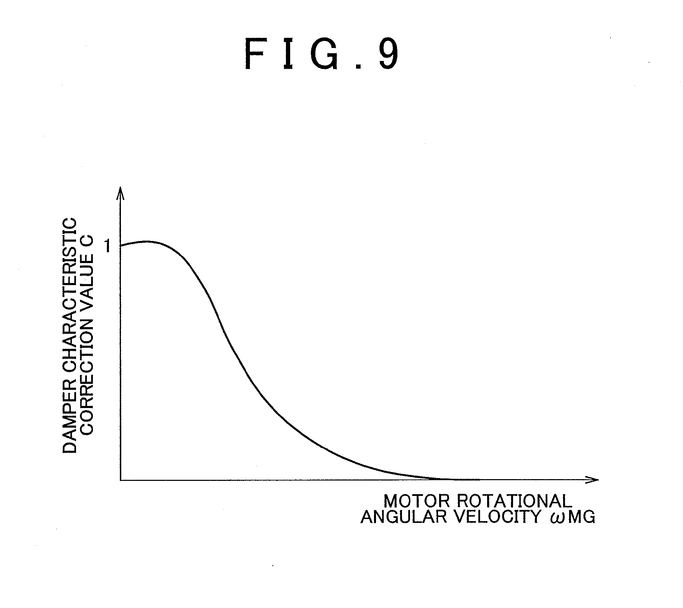

Also, the amplitude A is obtained by correcting a requested motor torque TMGr with the damper characteristics of the inertia damper system of the engine 10, and can be obtained from the requested motor torque TMGr and a correction map for the damper characteristics as shown in FIG. 9. The correction map for the damper characteristics is used to obtain a damper characteristic correction value C that is suitable for the motor rotational angular velocity ωMG (motor rotational speed NMG), and is set based on the transfer function of the inertia damper system. As shown in FIG. 9, the damper characteristic correction value C increases with decrease in the motor rotational angular velocity ωMG Here, the amplitude A is obtained from the current requested motor torque TMGr and motor rotational angular velocity ωMG (motor rotational speed NMG) and the correction map for the damper characteristics. For example, the vibration torque calculation means 100g obtains a damper characteristic correction value C from the current motor rotational angular velocity ωMG (motor rotational speed NMG) and the correction map for the damper characteristics, and calculates the amplitude A by substituting the damper characteristic correction value C and the current requested motor torque TMGr into equation 3 below. The requested motor torque TMGr is changed depending on an accelerator operation of the driver or decreased with the decrease in the motor rotational angular velocity ωMG during the engine stall control.

$$A = TMGr * C \dots (3)$$

The vibration torque calculation means 100g sets the vibration torque TMGv based on the frequency f, the amplitude A, and the motor rotational angle θMG of the motor/generator 20.

The information on the vibration torque TMGv is sent to target motor torque calculation means 100h of the hybrid ECU 100 together with the information on the requested motor torque TMGr from the driver. The target motor torque calculation means 100h obtains a driving torque TMGd by combining the requested motor torque TMGr and the vibration torque TMGv, and sets the driving torque TMGd as the output torque (target motor torque TMGt) of the motor/generator 20. Also, the target motor torque calculation means 100h sets an output torque (target motor torque TMGt) of the motor/generator 20 after the start of engine start control by adding a motor torque TMGest for starting the engine to the driving torque TMGd. The engine stall control means 100e executes the engine stall control to simultaneously decrease the motor rotational angular velocity ωMG and generates a vibration by causing the target motor torque TMGt to be output.

As described above, when the engaging speed of the second clutch mechanism 80 (i.e., the speed at which the driver engages the clutch pedal 91) is high, the motor rotational angular velocity ωMG may be significantly decreased as compared with the case where the second clutch mechanism 80 is engaged slowly, making it difficult to secure the cranking request engine rotational angular velocity ωE0 and the motor torque TMGest. Thus, the engine stall control means 100e may be configured to generate a vibration that is similar to that in a state immediately before the engine stall in the engine-drive mode in the vehicle body simultaneously with or independently from the decrease in the motor rotational angular velocity ωMG, if the engaging speed of the second clutch mechanism 80 exceeds a prescribed speed when the motor rotational angular velocity ωMG when there is an engine start request during EV driving is below the cranking request motor rotational angular velocity ωMG0. The prescribed speed may be set to the lowest speed in the range of the engaging speed of the second clutch mechanism 80 in which it is difficult to start the engine 10, for example. Even with this configuration, because the driver may be made aware of a state immediately before an engine stall more properly, the driver is more likely to release the clutch. As a result the engine 10 can be started more properly and prolongation of the time that is necessary to start the engine 10 can be prevented more properly.

Also, the engine stall control means 100e may be configured to increase the change in the output of the motor/ generator 20 (increase the vibration that is generated by repeatedly increasing and decreasing the motor torque TMG of the motor/generator 20) as compared with the case when the engaging speed of the second clutch mechanism 80 is low, that is, as the engaging speed of the second clutch mechanism 80 is higher if the engaging speed of the second clutch mechanism 80 increases beyond a specified speed when the motor rotational angular velocity ωMG when there is an engine start request during EV driving is lower than the cranking request motor rotational angular velocity ωMG0. Then, the driver may be made aware of the state immediately before an engine stall more properly.

In addition, in the above embodiment, the motor rotational angular velocity adjusting means (the engine rotational angular velocity meter display means 100d and the engine stall control means 100e) that is constituted as clutch transmitting torque adjusting means is described. However, because the motor rotational angular velocity ωMG may be increased by increasing the motor torque TMG, the motor rotational angular velocity ωMG may be maintained equal to or above the cranking request motor rotational angular velocity ωMG0 by increasing the motor torque TMG when the engine 10 is started. The motor torque TMG enables the motor rotational angular velocity ωMG to be maintained at least at the cranking request motor rotational angular velocity ωMG0 and increases the motor rotational angular velocity ωMG to such a level that the motor torque TMGest is transmitted to the engine output shaft 11 when the first clutch mechanism 70 is engaged. That is, the motor rotational angular velocity adjusting means in this case is configured to increase the motor torque TMG so that the motor rotational angular velocity ωMG can be maintained at least at the cranking request motor rotational angular velocity ωMG0, and can be referred to as motor output adjusting means.

In addition, in the above-described embodiment, the second clutch mechanism 80 is described as being mechanically coupled to the clutch pedal 91 and configured to operate at an engaging speed that corresponds to the speed at which the driver operates the clutch pedal 91 to engage or release the clutch, and have a degree of engagement and a clutch transmitting torque TMC that are proportional to the engaging operation amount or releasing operation amount that the driver provides to the clutch pedal 91. Here, the relationship between the operation of the clutch pedal 91 by the driver and the action of the second clutch mechanism 80 is used as a basis. In contrast, a configuration that includes an actuator that controls the displacement of the engaging members of the second clutch mechanism 80 and displaces the engaging members faster or slower than a reference engaging or releasing speed and more or less than a reference amount of displacement can be contemplated. In the following, the second clutch mechanism 80 that has the actuator is referred to as "third clutch mechanism" for convenience sake. For example, the third clutch mechanism is configured to exhibit normal movement that is proportional to the operation of the clutch pedal 91 by the driver and exhibits movement beyond the normal range by actuating the actuator under certain conditions.

Here, as described above, when the engaging speed of the third clutch mechanism (i.e., the speed at which the driver operates the clutch pedal 91 to the engaged stage) is high, the motor rotational angular velocity ωMG may be significantly decreased as compared with the case where the third clutch mechanism 80 is engaged slowly, making it difficult to secure the cranking request engine rotational angular velocity ωE0 and the motor torque TMGest. Thus, the motor rotational angular velocity adjusting means (clutch transmitting torque adjusting means) in this case causes the clutch ECU 103 to control the actuator 73 so that the engaging speed of the third clutch mechanism is below the normal engaging speed (i.e., the speed that corresponds to the speed at which the driver operates the clutch pedal 91 to the engaged stage) if the speed at which the driver operates the clutch pedal 91 to the engaged stage is higher than a prescribed speed and the engaging speed of the third clutch mechanism is high accordingly when the motor rotational angular velocity ωMG when there is an engine start request during EV driving falls below the cranking request motor rotational angular velocity ωMG0. The specified speed may be set to the lowest speed in the range of the speed at which the the driver operates the clutch pedal 91 to the engaged stage and in which it is difficult to start the engine 10, for example. Then, because the rate of increase in the clutch transmitting torque TMC of the third clutch mechanism decreases, the motor rotational angular velocity ωMG during EV driving is maintained at least at the cranking request motor rotational angular velocity ωMG0 so that the engine 10 may be started properly.

Also, the motor rotational angular velocity adjusting means (clutch transmitting torque adjusting means) may be configured to increase the change in the output of the motor torque TMG so that a vibration that is similar to that in a state immediately before an engine stall in the engine-drive mode is generated when the engagement speed of the third clutch mechanism at startup of the engine 10 exceeds a specified speed. Then, because the driver takes an engine stall avoidance action, the clutch transmitting torque TMC of the third clutch mechanism decreases and the motor rotational angular velocity ωMG during EV driving can be maintained at least at the cranking request motor rotational angular velocity ωMG0. Thus, the engine 10 may be started properly.

In addition, while the motor/generator 20, is shown as an example of the electric motor in the above embodiment, any form of electric motor that converts electric energy into mechanical energy and outputs the mechanical energy as power may be used. For example, a motor that normally operates as a motor and may be operated as a generator when necessary, or a generator that normally operates as a generator and may be operated as a motor when necessary, may be employed as the electric motor.

As described above, the control device for a hybrid vehicle according to the present invention is useful in a hybrid vehicle, in which a clutch mechanism is provided between an electric motor and a power transmission device such as a manual transmission and an engine is started by the electric motor torque of the electric motor, can secure the electric motor rotational angular velocity and electric motor torque that are necessary for a proper cranking of the engine.

A control device for a hybrid vehicle (1) that includes a engine (10); an electric motor (20); a manual transmission (30); and a clutch mechanism (80) that transmits torque between the electric motor (20) and the manual transmission (30), the engine (10) being configured to be started using the torque of the electric motor (20). The control device includes clutch transmitting torque adjusting means that decreases the clutch transmitting torque of the clutch mechanism at startup of the engine (10).

**Claims**

1. A control device for a hybrid vehicle (1) that includes an engine (10) as a power source; an electric motor (20) as another power source; a manual transmission (30); and a clutch mechanism (80) that transmits torque between the electric motor (20) and the manual transmission (30), wherein the engine (10) is started using electric motor torque (TMG) from the electric motor (20), the control device being **characterized by** comprising:

   clutch transmitting torque adjusting means that decreases the clutch transmitting torque (TMC) of the clutch mechanism at startup of the engine (10).

2. The control device according to claim 1, wherein the clutch transmitting torque adjusting means adjusts the degree of engagement the clutch mechanism (80) so that the clutch transmitting torque (TMC) of the clutch mechanism (80) is decreased to a specified value or lower.

3. The control device according to claim 1 or 2, wherein:

   the clutch transmitting torque of the clutch mechanism changes in response to a clutch engaging operation or a clutch releasing operation of the driver of the hybrid vehicle; and
   the clutch transmitting torque adjusting means decreases the clutch transmitting torque (TMC) of the clutch mechanism that has increased in response to a clutch engaging operation of the driver at startup of the engine (10).

4. The control device according to claim 3, wherein the clutch transmitting torque adjusting means restrains the driver from performing a clutch engaging operation.

5. The control device according to claim 4, wherein the clutch transmitting torque adjusting means alerts the driver to restrain the driver from performing a clutch engaging operation.

6. The control device according to claim 4 or 5, wherein the clutch transmitting torque adjusting means restrains the driver from performing a clutch engaging operation by repeatedly increasing and decreasing electric motor torque (TMG) of the electric motor (20).

7. The control device according to any one of claims 4-6, wherein the clutch transmitting torque adjusting means restrains the driver from performing a clutch engaging operation by decreasing electric motor torque (TMG) of the electric motor (20).

8. The control device according to claim 1, wherein:

the clutch mechanism (80) is engaged or released at the operating speed that corresponds to the clutch operating speed of the driver of the hybrid vehicle (1); and

wherein the clutch transmitting torque adjusting means decreases the engaging speed of the clutch mechanism (80) to an engaging speed that corresponds to the clutch operating speed of the driver or lower if the clutch operating speed at which the driver operates the clutch mechanism (80) to the engaging state exceeds a specified speed at startup of the engine (10).

9. The control device according to claim 1, wherein:

the clutch mechanism (80) is engaged or released at the operating speed that corresponds to the clutch operating speed of the driver of the hybrid vehicle (1); and

the clutch transmitting torque adjusting means increases the change in the output of the electric motor torque (TMG) of the electric motor (20) if the engaging speed of the clutch mechanism (80) at startup of the engine (10) exceeds a prescribed speed.

# FIG.1

EP 2 287 058 A1

# F I G . 2

# F I G . 3

# F I G . 4

START ENGINE
STALL CONTROL

INTERRUPTION OF
ENGINE STALL
CONTROL

ENGINE START
CONTROL MEANS

V

0                                    t

$\omega$ MG

$\omega$ MG0

0                                    t

$\omega$ E

$\omega$ E0

0                                    t

TMG

TMGlim

0                                    t

AUTOMATIC CLUTCH

ENGAGED

RELEASED

0                                    t

MANUAL CLUTCH

ENGAGED

RELEASED

0                                    t

$\theta$ ac

0                                    t

# F I G . 5

START

ST1

DURING EV DRIVING ? — NO

YES  ST2

IS THERE ENGINE START REQUEST ? — NO

YES  ST3

CALCULATE MOTOR ROTATIONAL ANGULAR VELOCITY $\omega$MG

ST4

NO — $\omega$MG < $\omega$MG1 ?

YES  ST5

START ENGINE STALL CONTROL  ST6

ALERT DRIVER THAT ENGINE IS ABOUT TO STALL

ST7

HAS DEGREE OF ENGAGEMENT OF MANUAL CLUTCH DECREASED ? — NO

YES  ST8

INTERRUPT ENGINE STALL CONTROL

ST9

YES — $\omega$MG < $\omega$MG1 ?

NO

WHAT IS DEGREE OF ENGAGEMENT OF MANUAL CLUTCH ?

LOW  ST10

HIGH

ST12

PERFORM NECESSARY CONTROL OPERATION TO ENGAGE AUTOMATIC CLUTCH

ST13

ALERT DRIVER ABOUT ENGINE STALL

ST11

PERFORM ENGINE START CONTROL

END

22

# F I G . 6

ENGINE START
CONTROL MEANS

# FIG.7

# FIG.8

VIBRATION TORQUE CALCULATION MEANS — 100g

MOTOR ROTATIONAL ANGULAR VELOCITY $\omega$MG (MOTOR ROTATIONAL SPEED NMG)

$f = NMG/60*$ (NUMBER OF CYLINDERS/2)

REQUESTED MOTOR TORQUE TMGr

A = TMGr*C

VIBRATION TORQUE TMGv

MOTOR ROTATIONAL ANGLE $\theta$ MG

TARGET MOTOR TORQUE CALCULATION MEANS — 100h

+ +

DRIVING TORQUE TMGd

ENGINE STARTING MOTOR TORQUE TMGest

+ +

TARGET MOTOR TORQUE TMGt

OUTPUT

EP 2 287 058 A1

# FIG.9

Vertical axis: DAMPER CHARACTERISTIC CORRECTION VALUE C (marked 1)

Horizontal axis: MOTOR ROTATIONAL ANGULAR VELOCITY ωMG

**Europäisches Patentamt**

**European Patent Office**

**Office européen des brevets**

# EUROPEAN SEARCH REPORT

Application Number

EP 10 17 3060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 177 930 A2 (FIAT RICERCHE [IT]) 6 February 2002 (2002-02-06) * abstract * * paragraph [0005] - paragraph [0005] * * paragraph [0020] - paragraph [0020] * * paragraph [0029] - paragraph [0029] * * paragraph [0033] - paragraph [0038] * * claims 1,3 * * figures 1,2 * ----- | 1-9 | INV. B60W20/00 B60K6/48 ADD. B60W10/02 B60W10/06 B60W10/08 |
| X | US 2008/245332 A1 (RIMAUX STEPHANE [FR] ET AL) 9 October 2008 (2008-10-09) * abstract * * paragraph [0026] - paragraph [0026] * * paragraph [0049] - paragraph [0049] * * paragraph [0103] - paragraph [0103] * * claims 1,3,8 * * figures 1-4 * ----- | 1-9 | |
| X | DE 100 31 438 A1 (SUZUKI MOTOR CO [JP]) 5 April 2001 (2001-04-05) * abstract * * column 2, line 20 - column 2, line 37 * * column 5, line 27 - column 5, line 33 * * column 9, line 57 - column 10, line 19 * * column 11, line 51 - column 11, line 63 * * column 12, line 39 - column 12, line 64 * * figures 1-4 * ----- | 1-9 | TECHNICAL FIELDS SEARCHED (IPC) B60W B60K |
| A | DE 198 38 853 A1 (AISIN AW CO [JP]) 4 March 1999 (1999-03-04) * abstract * * column 8, line 48 - column 8, line 52 * * claims 3,4,7-11,14-18,20,21 * * figures 1-16 * ----- | 1-9 | |

The present search report has been drawn up for all claims

| Place of search | Date of completion of the search | Examiner |
|---|---|---|
| The Hague | 9 December 2010 | Törgyekes, Szabolcs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 10 17 3060

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2010

| Patent document cited in search report | | Publication date | Patent family member(s) | | Publication date |
|---|---|---|---|---|---|
| EP 1177930 | A2 | 06-02-2002 | AT | 360550 T | 15-05-2007 |
| | | | DE | 60128037 T2 | 30-08-2007 |
| | | | ES | 2284571 T3 | 16-11-2007 |
| | | | IT | TO20000771 A1 | 04-02-2002 |
| | | | US | 2002019290 A1 | 14-02-2002 |
| US 2008245332 | A1 | 09-10-2008 | CN | 101341041 A | 07-01-2009 |
| | | | EP | 1937963 A1 | 02-07-2008 |
| | | | FR | 2892471 A1 | 27-04-2007 |
| | | | WO | 2007045785 A1 | 26-04-2007 |
| | | | JP | 2009512589 T | 26-03-2009 |
| DE 10031438 | A1 | 05-04-2001 | JP | 2001010360 A | 16-01-2001 |
| | | | US | 6342027 B1 | 29-01-2002 |
| DE 19838853 | A1 | 04-03-1999 | JP | 3775012 B2 | 17-05-2006 |
| | | | JP | 11082261 A | 26-03-1999 |
| | | | US | 6018198 A | 25-01-2000 |

EPO FORM P0459

For more details about this annex : see Official Journal of the European Patent Office, No. 12/82

## REFERENCES CITED IN THE DESCRIPTION

**Patent documents cited in the description**

- JP 11075302 A
- JP 2008044521 A
- JP 2007325417 A
- JP 2002211250 A